# EUROPÄISCHE PATENTSCHRIFT

(11) **EP 2 768 646 B1**
(45) Veröffentlichungstag und Bekanntmachung des Hinweises auf die Patenterteilung: **14.06.2017**
(21) Anmeldenummer: 12786856.0
(22) Anmeldetag: 16.10.2012
(51) Int. Cl.: B29B 17/02, H01M 6/52, H01M 10/54

(54) **RECYCLING VON PRODUKTEN**
RECYCLING OF PRODUCTS
RECYCLAGE DE PRODUITS

(30) Priorität: 17.10.2011 DE 102011116046
(43) Veröffentlichungstag der Anmeldung: 27.08.2014
(73) Patentinhaber: Johnson Controls Autobatterie GmbH & Co. KGaA, 30419 Hannover (DE)
(72) Erfinder: MEISSNER, Eberhard, 31515 Wunstorf (DE); LEDOUX, Anne-Laure, 30855 Langenhagen (DE); BAUER, Jürgen, 31141 Hildesheim (DE)
(74) Vertreter: Trinks, Ole
(86) Internationale Anmeldenummer: PCT/EP2012/070457
(87) Internationale Veröffentlichungsnummer: WO 2013/057087

(56) Entgegenhaltungen:
- EP-A1- 1 801 148
- DE-A1-102005 020 816
- DE-A1-102007 007 506
- US-A1- 2005 277 710
- US-A1- 2007 069 153
- "ADVERTISEMENT", MODERN PLASTICS INTERNATIONAL, MCGRAW-HILL,INC. LAUSANNE, CH, Bd. 22, Nr. 12, 1. Dezember 1992 (1992-12-01), Seite 101, XP000336285, ISSN: 0026-8283
- GALLET S: "LE RECYCLAGE DES éQUIPEMENTS AUTOMOBILES: EXEMPLE DES BATTERIES, DES PARE-CHOCS ET DU ZINC DES CORROSSERIES GALVANISéES", INGENIEURS DE L'AUTOMOBILE, EDITIONS VB, GARCHES, FR, Nr. 689, 1. Mai 1994 (1994-05-01), Seiten 6-08, XP000450965, ISSN: 0020-1200

## Beschreibung

Die Erfindung betrifft ein Verfahren zur Herstellung eines recyclingfähigen Produkts gemäß Anspruch 1.

Allgemein betrifft die Erfindung das Recycling von Produkten. Der Begriff "Recycling" bezeichnet dabei einen Prozess, durch den die in Produkten enthaltenen Rohstoffe einer Wiederverwendung zugänglich gemacht werden. Hierbei werden üblicherweise alle Arten von Abfallmaterialien, die wieder verwendbare Rohstoffe enthalten, nach entsprechenden Rohstoffen bzw. deren Materialien selektiert, so dass möglichst reine, gut wieder verwendbare Materialien zur Verfügung stehen. Im Sinne der vorliegenden Patentanmeldung ist der Begriff des "Recycling" allerdings nicht auf die Wiederverwendung der Materialien beschränkt, sondern umfasst auch alle anderen Arten von deren stofflicher Verwertung, insbesondere auch eine energetische Verwertung, z. B. durch Verbrennung.

Es sind unterschiedliche Methoden der Separierung der in einer Recyclinganlage eingehenden Produkte bzw. von Stücken solcher Produkte bekannt. Bekannt ist z. B. eine sog. Flotationsanlage, in der voneinander zu separierende Materialien in einem Flüssigkeitsbehälter unter Ausnutzung ihrer unterschiedlichen spezifischen Gewichte voneinander getrennt werden. Leichtere Materialien schwimmen hierbei obenauf, während schwerere Materialien zu Boden sinken. Eine andere Methode der Separierung besteht darin, die Gegenstände einer Beschleunigung auszusetzen, z. B. durch eine Kreisbewegung, um hierdurch leichtere von schwereren Gegenständen zu trennen. Allgemein ist es das Ziel einer Separierung, die Produkte oder Stücke von Produkten nach Ihren unterschiedlichen Materialien voneinander zu trennen, um sie anschließend sortiert sammeln zu können. Insgesamt gibt es aber nur eine begrenzte Anzahl solcher Separierungsmethoden, was zur Folge hat, dass bei bestimmten Materialien eine automatische Trennung voneinander schwierig ist.

Aus der WO 98/045057 oder der DE 103 02 853 A1 sind Vorschläge bekannt, Behälter durch daran nach der Produktion des Behälters befestigte Identifizierungsgegenstände zu kennzeichnen und diese in einem späteren Recyclingprozess wieder zu erkennen. Dies hat aber den Nachteil, dass die zusätzlich angebrachten Identifizierungsgegenstände im Laufe der Produktbenutzung verloren gehen können. Zudem handelt es sich um zusätzliche Gegenstände, die das Produkt körperlich verändern, so dass der Vorschlag nicht bei beliebigen Produkten einsetzbar ist.

Die DE 10 2005 020 816 A1 betrifft den Einsatz von Fluoreszenzfarbstoffen zur Markierung von Kunststoff-Bauteilen in Gegenständen, um ein vereinfachtes Recycling dieser Gegenstände zu ermöglichen.

Die EP 1 801 148 A1 betrifft ein Verfahren zum Sortieren und Recyceln von Komponenten aus Polypropylen.

Der Erfindung liegt daher die Aufgabe zugrunde, verbesserte Möglichkeiten der Separierung eines Produkts oder von Stücken des Produkts in einer Recyclinganlage voneinander und/oder von anderen Gegenständen aufzuzeigen.

Zur Lösung dieser Aufgabe zieht die Erfindung den gesamten Recyclingprozess, beginnend mit der Herstellung eines Produkts, in Betracht und optimiert den Recyclingprozess in mehrerlei Hinsicht. Es wurde nämlich erkannt, dass eine reine Optimierung in den Endstadien des Recyclingprozesses, d. h. bei der eigentlichen Separierung, noch verbessert werden kann, wenn bereits in der Phase der Herstellung eines recyclingfähigen Produkts das spätere Recyclingverfahren berücksichtigt wird.

Die der Erfindung zugrunde liegende Aufgabe wird durch ein Verfahren gemäß dem unabhängigen Patentanspruch 1 gelöst, wobei vorteilhafte Weiterbildungen des erfindungsgemäßen Verfahrens in den entsprechenden abhängigen Ansprüchen angegeben sind.

Gemäß Anspruch 1 wird daher insbesondere ein Verfahren zur Herstellung eines recyclingfähigen Produkts aus einem ersten Material vorgeschlagen, bei dem vor oder bei der Herstellung des Produkts dem ersten Material ein erstes Kennzeichnungsmaterial beigemischt wird und das Produkt oder wenigstens eine Komponente des Produkts mit dem ersten Material mit dem beigemischten ersten Kennzeichnungsmaterial hergestellt wird, wobei das erste Kennzeichnungsmaterial in dem ersten Material nach dessen Herstellung in einer Recyclinganlage automatisch detektierbar ist. Eine solche Kennzeichnung des Produkts bzw. wenigstens einer Komponente des Produkts mit dem ersten Kennzeichnungsmaterial hat gegenüber den bekannten Vorschlägen der Produktkennzeichnung im Recyclingbereich den Vorteil, dass die Kennzeichnung während des Gebrauchs des Produkts über die Lebensdauer nicht verloren gehen kann und auch nicht beschädigt werden kann. Dadurch, dass das erste Kennzeichnungsmaterial direkt dem ersten Material beigemischt ist, wird das erste Kennzeichnungsmaterial ebenfalls zu einem Materialbestandteil des Produkts, der nicht mehr verloren gehen kann.

Gemäß der Erfindung kann ein Produkt oder eine Komponente des Produkts aus einem zweiten Material, das in einer Recyclinganlage von dem ersten Material separiert werden soll, hergestellt werden, indem vor oder bei der Herstellung des Produkts dem zweiten Material ein anderes zweites Kennzeichnungsmaterial beigemischt wird und das Produkt aus dem ersten Material und dem beigemischten zweiten Kennzeichnungsmaterial hergestellt wird, wobei das zweite Kennzeichnungsmaterial in dem zweiten Material nach dessen Herstellung in einer Recyclinganlage automatisch detektierbar ist.

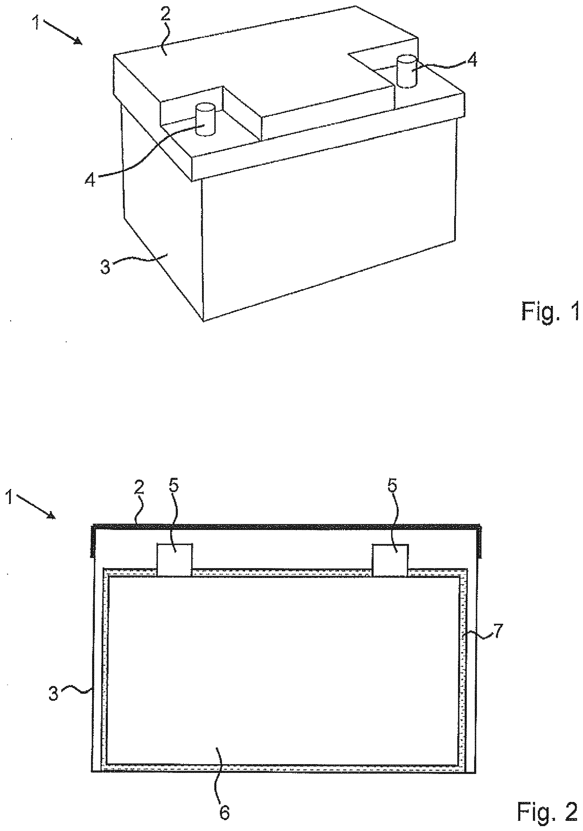

Als Material eines Produkts oder einer Komponente des Produkts sei hierbei sowohl ein Material aus nur einem einzelnen Rohstoff als auch ein Material aus einer Mischung von zwei oder mehr Rohstoffen verstanden. Als Komponente eines Produkts sei bei Produkten, die aus mehreren einzelnen Teilen (Komponenten) hergestellt werden, die einzelnen Teile verstanden. In Bezug auf das Produkt Akkumulator, wie in Figur 1 dargestellt, sind als Komponenten des Produkts Akkumulator das Gehäuse mit einem Gehäuseunterteil und einem Gehäusedeckel, ferner die Anschlusspole, die Elektrodenplatten und die Separatoren vorhanden.

Das Kennzeichnungsmaterial kann dem Material des Produkts bzw. der Produktkomponente direkt bei der Herstellung des Produkts beigemischt werden, z. B. bei einem Spritzgießvorgang eines Gehäusebauteils, wenn es sich um ein Kunststoffmaterial handelt. Die Beimischung kann auch vor der Herstellung des Produkts erfolgen, z. B. indem bereits ein erstes Material mit einem beigemischten ersten Kennzeichnungsmaterial angeliefert wird. Im Fall der Herstellung von Kunststoffprodukten kann beispielsweise dem angelieferten Kunststoff-Granulat bereits das erste Kennzeichnungsmaterial beigemischt sein.

Insbesondere wird erfindungsgemäß ein Verfahren zum Recycling eines Produkts vorgeschlagen, wobei das Produkt oder wenigstens eine Komponente des Produkts mit einem ersten Material hergestellt ist, dem ein erstes Kennzeichnungsmaterial beigemischt ist, wobei das Produkt, eine Komponente des Produkts oder Stücke des Produkts in einer Recyclinganlage von anderen Gegenständen und/oder Stücke des Produkts voneinander separiert werden, indem das erste Kennzeichnungsmaterial in dem ersten Material detektiert wird und das Produkt, die Komponente des Produkts oder die Stücke des Produkts von anderen Gegenständen und/oder von Stücken des Produkts separiert werden, bei denen kein Kennzeichnungsmaterial oder ein anderes zweites Kennzeichnungsmaterial detektiert wird.

Dies hat den Vorteil, dass das Produkt bzw. auch jede einzelne Komponente und jedes einzelne Stück des Produkts in der Recyclinganlage auf einfache Weise detektiert und von anderen Gegenständen oder Stücken von Produkten separiert werden kann, indem das erste Kennzeichnungsmaterial detektiert wird. Das Verfahren kann in allen Arten von Recyclinganlagen vorteilhaft eingesetzt werden, insbesondere auch in Recyclinganlagen, bei denen zu recycelnde Produkte zunächst über einen Brecher in kleine Stücke zerteilt werden. Aufgrund der Beimischung des ersten Kennzeichnungsmaterials direkt in dem ersten Material des Produkts kann dieses dann auch in den einzelnen Stücken des Produkts weiterhin identifiziert werden, was bisher bei Verfahren nach dem Stand der Technik nicht möglich war.

Gemäß der Erfindung ist daher vorgesehen, dass das Produkt oder wenigstens eine Komponente des Produkts vor der Detektierung des ersten bzw. des zweiten Kennzeichnungsmaterials in Stücke zerkleinert wird und für die Stücke des Produkts die Separierung durchgeführt wird.

Gemäß der Erfindung ist das erste bzw. das zweite Kenn-Zeichnungsmaterial vollständig im ersten Material des Produkts oder wenigstens einer Komponente des Produkts verteilt. Das erste Kennzeichnungsmaterial kann dabei ungleichmäßig oder gleichmäßig verteilt sein. Eine gleichmäßige Verteilung ist für das spätere Recycling insgesamt günstiger, geringfügige Ungleichmäßigkeiten sind aber unschädlich.

Das erste Material kann grundsätzlich ein beliebiges Material sein, insbesondere ein organisches oder anorganisches Material. Gemäß einer vorteilhaften Weiterbildung der Erfindung ist das erste Material ein Polymermaterial, insbesondere Polypropylen, Polyethylen, eine Mischung daraus oder ein Co-Polymer von Polyethylen und Polypropylen.

Gemäß einer vorteilhaften Weiterbildung der Erfindung ist das erste bzw. das zweite Kennzeichnungsmaterial ein mittels eines optischen Sensors, eines elektromagnetischen oder eines magnetischen Sensors detektierbares Material. Der optische Sensor kann z. B. eine Kamera sein, der magnetische Sensor kann z. B. ein Reed-Schalter oder eine Magnetfeldsonde sein. Als elektromagnetischer Sensor kann z. B. eine elektrische Spule vorgesehen sein.

Das erste bzw. das zweite Kennzeichnungsmaterial kann z. B. ein Material mit einer bestimmten Farbe sein, die charakteristisch und unverwechselbar ist und insbesondere in anderen, ähnlichen Produkten aus einem anderen Material nicht vorhanden ist. In diesem Fall weist das erste bzw. das zweite Kennzeichnungsmaterial farbige Pigmentstoffe auf. Das erste bzw. das zweite Kennzeichnungsmaterial kann ein Farbstoff oder eine Farbstoffmischung sein. Hierdurch ist z. B. eine Detektion des ersten bzw. des zweiten Kennzeichnungsmaterials mittels eines optischen Sensors durchführbar.

Das erste bzw. das zweite Kennzeichnungsmaterial kann auch ein magnetisches Material sein, z. B. Magnetitpulver oder Eisenfeilspäne. Dies erlaubt eine Detektion mittels eines magnetischen Sensors.

Das erste bzw. das zweite Kennzeichnungsmaterial kann auch ein ein elektromagnetisches Feld veränderndes Material aufweisen. So können z. B. als erstes Kennzeichnungsmaterial Mikrospulen dem ersten Material beigemischt werden, z. B. Mikrospulen aus Kohlenstoff. Als Mikrospulen werden dabei elektrische Spulen mit Abmessungen von wenigen Mikrometern bezeichnet. Diese bewirken eine erhöhte Absorption von elektromagnetischer Hochfrequenzstrahlung, die auf das Produkt abgestrahlt wird. Eine solche Absorption von elektromagnetischen Feldern kann z. B. mittels eines elektromagnetischen Sensors detektiert werden.

Allgemein gesagt kann das erste bzw. das zweite Kennzeichnungsmaterial ein Material sein, das ohne äußere Anregung detektierbar ist. Das erste bzw. das zweite Kennzeichnungsmaterial kann auch ein Material sein, das erst von außen angeregt werden muss, um detektierbar zu sein. Gemäß einer vorteilhaften Weiterbildung der Erfindung ist das erste bzw. das zweite Kennzeichnungsmaterial ein auf ein elektromagnetisches Wechselfeld oder ein Magnetfeld reagierendes Material. Hierbei kann ein auf ein elektromagnetisches Wechselfeld in unterschiedlichen Frequenzbereichen unterschiedlich reagierendes Material verwendet werden, wobei alle in unterschiedlichen Frequenzbereichen reagierenden Materialien grundsätzlich verwendbar sind. Zu den elektromagnetischen Wechselfeldern in diesem Sinne zählt auch Licht, sowohl im sichtbaren als auch im für den Menschen nicht sichtbaren Bereich. Als sichtbarer Bereich des Lichts gilt elektromagnetische Strahlung im Bereich von 380 bis 780 µm Wellenlänge. Als elektromagnetische Strahlung im nicht sichtbaren Bereich wird z. B. Infrarot-Strahlung oder Ultraviolett-Strahlung verstanden, die häufig ebenfalls als Licht bezeichnet werden.

Das erste bzw. das zweite Kennzeichnungsmaterial kann insbesondere ein auf Licht im nicht sichtbaren Wellenlängenbereich mit einer Farbänderung reagierendes Material sein, ein magnetisches, ein fluoreszierendes oder ein phosphorisierendes Material oder ein Photolumineszenz-Material. Das erste bzw. das zweite Kennzeichnungsmaterial kann z. B. Fluoreszin, ein im Nah-Infrarot-Bereich fluoreszierendes Fluophor (NIRFS) oder Storelite sein, oder für den Fall eines phosphorisierenden Materials ein Sulfit von Metallen der zweiten Gruppe sowie Zink, denen geringe Mengen von Schwermetallsalzen zugemischt sind, wie z. B. kupferdotierte Zinksulfitpigmente, oder ein CAS/SRS Mischsulfit mit Wismut dotiert.

Gemäß einer vorteilhaften Weiterbildung der Erfindung wird das erste Material in dem Produkt, einer Komponente des Produkts oder Stücken des Produkts identifiziert, indem das erste Kennzeichnungsmaterial in dem ersten Material detektiert wird und aufgrund einer definierten Zuordnung zwischen dem ersten Material und dem ersten Kennzeichnungsmaterial das erste Material identifiziert wird. Das erste Material kann dabei z. B. hinsichtlich des Materialtyps identifiziert werden, z. B. ob es sich um ein Kunststoffmaterial handelt, wobei auch unterschieden werden kann zwischen verschiedenen Arten von Kunststoffen. Die definierte Zuordnung zwischen dem ersten Material und dem ersten Kennzeichnungsmaterial kann dabei vom Hersteller des recyclingfähigen Produkts einem Recyclingbetrieb zur Verfügung gestellt werden.

Die Erfindung betrifft ferner ein recyclingfähiges Produkt, das nach einem der zuvor beschriebenen Verfahren hergestellt ist. Das Produkt kann insbesondere ein Akkumulatorgehäuse oder ein vollständiger Akkumulator sein, z. B. in Form einer Starterbatterie für Kraftfahrzeuge.

Die Erfindung betrifft ferner eine Recyclinganlage, die eingerichtet ist zur Ausführung eines zuvor beschriebenen Verfahrens.

Die Erfindung wird nachfolgend anhand von Ausführungsbeispielen unter Verwendung von Zeichnungen näher erläutert.

Es zeigen:
- Figur 1: einen Akkumulator in einer isometrischen Ansicht und
- Figur 2: den Akkumulator gemäß Figur 1 in einer Schnittdarstellung und
- Figur 3: eine Recyclinganlage.

In den Figuren werden gleiche Bezugszeichen für einander entsprechende Elemente verwendet.

Die Figur 1 zeigt einen Akkumulator 1, z. B. in Form einer Starterbatterie, in einer isometrischen Ansicht. Der Akkumulator 1 ist hierbei in einer vereinfachten Darstellung wiedergegeben. Erkennbar ist ein Gehäuse mit einem Gehäuseunterteil 3 und einem Gehäusedeckel 2, der auf das Gehäuseunterteil 3 aufgesetzt ist und dieses verschließt. Durch Öffnungen in dem Gehäuseoberteil 2 sind Anschlusspole 4 zur Außenseite des Akkumulators 1 geführt, die zur elektrischen Kontaktierung des Akkumulators 1 dienen.

Die Figur 2 zeigt den Akkumulator 1 in einer Schnittdarstellung durch eine Zelle des Akkumulators 1. Erkennbar ist der typische Aufbau einer Starterbatterie, bei der im Inneren einer Zelle Elektrodenplatten 6 vorgesehen sind, die über jeweilige Anschlussfahnen 5 mit den Anschlusspolen 4 verbunden sind. Einige Elektrodenplatten 6 können dabei in taschenförmigen Separatoren 7 angeordnet sein, z. B. jeweils die positiven Elektrodenplatten. Die Separatoren 7 stehen dabei etwas über die Elektrodenplatten 6 hinaus.

Beim Recycling eines solchen Akkumulators 1 sind die Gehäuseteile 2, 3, die z. B. aus Polypropylen gefertigt sind, von den Elektrodenplatten 6 und den Separatoren 7 und ggf. weiteren Bauteilen aus anderen Materialien zu trennen. Die Gehäusebauteile 2, 3 können dabei aus ungefülltem Polypropylen oder aus gefüllten Polypropylen bestehen, wobei für eine solche Füllung dem Polypropylen z. B. Talkum beigemischt wird. Durch bekannte Separationsverfahren, wie z. B. die Flotation, kann ungefülltes Polypropylen ohne weiteres von den anderen Stoffen separiert werden, insbesondere von gefülltem Polypropylen. Im Fall von Gehäusebauteilen aus gefülltem Polypropylen tritt bei der Flotation z. B. der Effekt auf, dass keine Separierung der gefüllten Polypropylenstücke von den Separatorstücken möglich ist, da diese beiden Bestandteile in der Flotationsanlage zu Boden sinken.

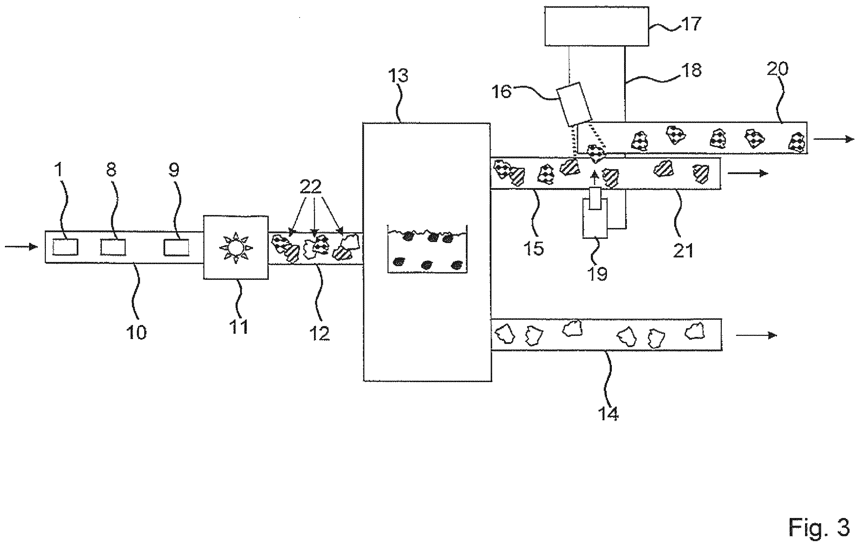

Anhand der Figur 3, die eine Recyclinganlage zeigt, soll zugleich ein Verfahren zum Recycling von Produkten 1, 8, 9, z. B. Akkumulatoren der anhand der Figuren 1 und 2 erläuterten Art, beschrieben werden. Die Recyclinganlage gemäß Figur 3 weist ein Zuführförderband 10 auf, auf dem drei Produkte 1, 8, 9 dem Recycling zugeführt werden. Z. B. ist das Produkt 1 ein Akkumulator mit Gehäusebauteilen aus ungefülltem Polypropylen, das Produkt 8 und das Produkt 9 jeweils ein Akkumulator mit Gehäusebauteilen aus gefülltem Polypropylen. In sämtlichen Akkumulatoren 1, 8, 9 sind Separatoren 7 vorhanden.

Die über das Zuführförderband 10 zugeführten Produkte 1, 8, 9 werden einem Brecher 11 zugeführt. Im Brecher 11 werden die Produkte 1, 8, 9 in kleine Stücke 22 gebrochen. Diese Stücke 22 werden über ein zweites Förderband 12 von dem Brecher 11 zu einer Flotationsanlage 13 transportiert. Die auf dem zweiten Förderband 12 sowie auf den weiteren, noch zu beschreibenden Förderbändern zu erkennenden Stücke 22 der Produkte 1, 8, 9 seien beispielhaft wie folgt definiert:

| | |
|---|---|
| Stücke mit Streifenmuster: | Stücke der Separatoren 7 |
| Stücke mit Karomuster: | Stücke von Gehäusebauteilen aus gefülltem Polypropylen |
| Stücke ohne Muster: | Stücke von Gehäusebauteilen aus ungefülltem Polypropylen. |

Hierbei sei angenommen, dass das gefüllte Polypropylenmaterial mit einem bei Ultraviolett-Lichtbestrahlung fluoreszierenden ersten Kennzeichnungsmaterial vermischt ist.

Die zugeführten Stücke werden in der Flotationsanlage 13 zunächst vorsepariert. Hierbei können die Stücke aus dem ungefüllten Polypropylenmaterial aussepariert werden und über ein drittes Förderband 14 abtransportiert werden.

Die aus der Flotationsanlage 13 austretende Mischfraktion von Separatorstücken und Stücken von gefülltem Polypropylen werden über ein viertes Förderband 15 einer Separationseinrichtung 16, 17, 18, 19 zugeführt, die eine Separation der zwei unterschiedlichen Stoffe voneinander anhand des im gefüllten Polypropylenmaterial beigemischten ersten Kennzeichnungsmaterials durchführt.

Die Separationseinrichtung weist eine Sensoreinrichtung 16 auf, die z. B. als digitale Kamera ausgebildet sein kann. Die Sensoreinrichtung 16 weist zusätzlich eine Strahlungsquelle zur Abgabe von ultraviolettem Licht auf, mit dem die auf dem vierten Förderband 15 vorhandenen Stücke bestrahlt werden. Die Sensoreinrichtung 16 ist über eine Leitung mit einer elektronischen Steuereinrichtung 17 verbunden. Diese ist durch Programmierung dazu eingerichtet, die von der Sensoreinrichtung gelieferten Bilder der auf dem vierten Förderband 15 befindlichen Stücke durch Bildverarbeitung auszuwerten und dabei mit dem ersten Kennzeichnungsmaterial gekennzeichnete Stücke zu detektieren. Die Detektion der mit dem ersten Kennzeichnungsmaterial markierten Stücke erfolgt durch Erkennung eines fluoreszierenden Lichteffekts in den von der Sensoreinrichtung 16 gelieferten Bildern. Bei Detektion eines mit dem ersten Kennzeichnungsmaterial markierten Stücks, d. h. in diesem Fall eines mit dem Karomuster versehenen Stücks, betätigt die elektronische Steuereinrichtung 17 über eine Leitung 18 einen Aktuator 19. Der Aktuator 19 bewirkt ein Verlagern des detektierten Stücks von dem vierten Transportband 15 auf ein fünftes Transportband 20. Der Aktuator 19 kann z. B. als Blaseinrichtung ausgebildet sein, die einen Luftstrom abgibt, durch den ein gewünschtes Stück von dem vierten Transportband 15 auf das fünfte Transportband 20 geblasen wird. Der Aktuator 19 kann z. B. auch als mit einer ausfahrbaren Stange versehener pneumatischer oder hydraulischer Zylinder ausgebildet sein. Über die Stange wird dann das Stück von dem vierten Förderband 15 auf das fünfte Förderband 20 geschoben.

Wie erkennbar ist, werden über das fünfte Förderband 20 die separierten Stücke aus gefülltem Polypropylen abtransportiert. Über das vierte Förderband 15 werden über einen hinter dem Aktuator 19 gelegenen Förderbandabschnitt 21 die verbleibenden Separatorstücke abtransportiert.

## Patentansprüche

1. Verfahren zum Recycling eines Produkts (1, 8, 9), wobei das Produkt (1, 8, 9) oder wenigstens eine Komponente des Produkts mit einem ersten Material hergestellt ist, dem ein erstes Kennzeichnungsmaterial beigemischt ist, wobei das Produkt (1, 8, 9), eine Komponente des Produkts oder Stücke (22) des Produkts (1, 8, 9) in einer Recyclinganlage von anderen Gegenständen und/oder Stücke (22) des Produkts (1, 8, 9) voneinander separiert werden, indem das erste Kennzeichnungsmaterial in dem ersten Material detektiert wird und das Produkt (1, 8, 9), die Komponente des Produkts oder die Stücke (22) des Produkts (1, 8, 9) von anderen Gegenständen und/oder von Stücken (22) des Produkts (1, 8, 9) separiert werden, bei denen kein Kennzeichnungsmaterial oder ein anderes zweites Kennzeichnungsmaterial detektiert wird, wobei das Produkt (1, 8, 9) oder wenigstens eine Komponente des Produkts vor der Detektierung des ersten bzw. des zweiten Kennzeichnungsmaterials in Stücke (22) zerkleinert wird und für die Stücke (22) des Produkts die Separierung durchgeführt wird, und wobei das erste bzw. das zweite Kennzeichnungsmaterial vollständig im ersten Material des Produkts (1, 8, 9) oder wenigstens einer Komponente des Produkts verteilt ist, insbesondere im Wesentlichen gleichmäßig verteilt ist,
**dadurch gekennzeichnet, dass**
das erste Kennzeichnungsmaterial in dem ersten Material in einer Recyclinganlage automatisch detektierbar ist, und dass
das Produkt (1, 8, 9) als Akkumulatorgehäuse oder als Akkumulator ausgebildet ist.

2. Verfahren nach Anspruch 1,
wobei das erste Material ein Polymermaterial ist, insbesondere Polypropylen, Polyethylen, eine Mischung daraus oder ein Co-Polymer von Polyethylen und Polypropylen.

3. Verfahren nach Anspruch 1 oder 2,
wobei das erste bzw. das zweite Kennzeichnungsmaterial mittels eines optischen Sensors (16), eines elektromagnetischen oder eines magnetischen Sensors detektierbar ist.

4. Verfahren nach einem der vorhergehenden Ansprüche,
wobei das erste bzw. das zweite Kennzeichnungsmaterial ein auf ein elektromagnetisches Wechselfeld oder ein Magnetfeld reagierendes Material ist, insbesondere ein auf Licht im nichtsichtbaren Wellenlängenbereich mit einer Farbänderung reagierendes Material, ein magnetisches, ein fluoreszierendes oder ein phosphorisierendes Material oder ein Fotolumineszenzmaterial.

5. Verfahren nach einem der vorhergehenden Ansprüche,
wobei das erste Material in dem Produkt (1, 8, 9), einer Komponente des Produkts oder Stücken (22) des Produkts (1, 8, 9) identifiziert wird, indem das erste Kennzeichnungsmaterial in dem ersten Material detektiert wird und aufgrund einer definierten Zuordnung zwischen dem ersten Material und dem ersten Kennzeichnungsmaterial das erste Material identifiziert wird.

## Claims

1. Process for recycling a product (1, 8, 9), wherein the product (1, 8, 9) or at least a component of the product is manufactured using a first material with a first marking material admixed, wherein the product (1, 8, 9), a component of the product or pieces (22) of the product (1, 8, 9) are separated from other objects and/or pieces (22) of the product (1, 8, 9) in a recycling plant by the first marking material being detected in the first material, and the product (1, 8, 9), the component of the product or pieces (22) of the product (1, 8, 9) are separated from other objects and/or pieces (22) of the product (1, 8, 9) in which no marking material or another second marking material is detected, wherein the product (1, 8, 9) or at least a component of the product is broken into pieces (22) before the detection of the first and/or second marking materials, and that the product separation process is performed on pieces (22) of the product, and wherein the first and/or second marking material is completely distributed in the first material of product (1, 8, 9) or at least in a component of the product, in particular, is substantially distributed evenly,
**characterized in that**
the first marking material in the first material is automatically detectable in a recycling plant, and that
the product (1, 8, 9) is configured as the housing of a rechargeable battery or as a rechargeable battery.

2. Process according to claim 1,
wherein the first material is a polymer material, in particular polypropylene, polyethylene, a mixture thereof, or a co-polymer of polyethylene and polypropylene.

3. Process according to claim 1 or 2,
wherein the first and/or second marking material is detectable by means of an optical sensor (16), an electromagnetic or a magnetic sensor.

4. Process according to one of the preceding claims,
wherein the first and/or second marking material is a material that responds to an alternating electromagnetic field or to a magnetic field, in particular a material responding to light in the invisible wavelength range with a color change, a magnetic, a fluorescent or a phosphorescent material or a photoluminescent material.

5. Process according to one of the preceding claims,
wherein the first material is identified in the product (1, 8, 9), a component of the product or pieces (22) of the product (1, 8, 9) by detecting the first marking material in the first material, and based on a defined assignment between the first material and the first marking material, the first material is identified.

## Revendications

1. Procédé pour le recyclage d'un produit (1, 8, 9), dans lequel le produit (1, 8, 9) ou au moins un composant du produit est fabriqué avec un premier matériau auquel on mélange un matériau caractérisant, dans lequel le produit (1, 8, 9), un composant du produit, ou des morceaux (22) du produit (1, 8, 9) sont séparés, dans une installation de recyclage, vis-à-vis d'autres objets et/ou d'autres morceaux (22) du produit (1, 8, 9) les uns par rapport aux autres, en détectant le premier matériau caractérisant dans le premier matériau, et le produit (1, 8, 9), le composant du produit ou les morceaux (22) du produit (1, 8, 9) sont séparés vis-à-vis d'autres objets et/ou de morceaux (22) du produit dans lesquels on ne détecte aucun matériau caractérisant ou un autre second matériau caractérisant, dans lequel le produit (1, 8, 9) ou au moins un composant du produit est broyé en morceaux (22) avant la détection du premier ou du second matériau caractérisant et on exécute la séparation pour les morceaux (22) du produit, et dans lequel le premier ou le second matériau caractérisant est totalement réparti, et en particulier sensiblement régulièrement, dans le premier matériau du produit (1, 8, 9) ou au moins dans un composant du produit,
**caractérisé en ce que**
le premier matériau caractérisant dans le premier matériau est susceptible d'être détecté automatiquement dans une installation de recyclage, et **en ce que**
le produit (1, 8, 9) est réalisé sous forme de boîtier d'accumulateur ou d'accumulateur.

2. Procédé selon la revendication,
dans lequel le premier matériau est un matériau polymère, en particulier polypropylène, polyéthylène, un mélange de ceux-ci ou bien un copolymère de polyéthylène et de polypropylène.

3. Procédé selon la revendication 1 ou 2,
dans lequel le premier ou le second matériau caractérisant est susceptible d'être détecté au moyen d'un capteur optique (16), d'un capteur électromagnétique ou d'un capteur magnétique.

4. Procédé selon l'une des revendications précédentes,
dans lequel le premier ou le second matériau caractérisant est un matériau qui réagit à un champ alternatif électromagnétique ou à un champ magnétique, en particulier un matériau qui réagit à la lumière dans une plage de longueurs d'onde non visible avec une modification de couleur, un matériau magnétique, un matériau fluorescent ou un matériau phosphorescent, ou un matériau présentant une photoluminescence.

5. Procédé selon l'une des revendications précédentes,
dans lequel le premier matériau dans le produit (1, 8, 9), un composant du produit ou des morceaux (22) du produit (1, 8, 9) est identifié en détectant le premier matériau caractérisant dans le premier matériau et le premier matériau est identifié en raison d'une association définie entre le premier matériau et le premier matériau caractérisant.
